# EUROPÄISCHE PATENTANMELDUNG

(11) **EP 1 878 372 A2**
(43) Veröffentlichungstag der Anmeldung: **16.01.2008**
(21) Anmeldenummer: 07012934.1
(22) Anmeldetag: 02.07.2007
(51) Int. Cl.: A47J 41/00

(54) **Getränkegefäss**

(30) Priorität: 06.07.2006 DE 102006031619
(71) Anmelder: LEIFHEIT AG, 56377 Nassau (DE)
(72) Erfinder: Wörsdörfer, Berno, 56414 Obererbach (DE); Klotz, Markus, 56357 Hainau (DE)

(57) **Zusammenfassung**

Ein Getränkegefäß weist ein Anzeigemittel zur Anzeige der im Getränkegefäß (1) befindlichen Getränkeart auf. In einer vorteilhaften Ausführung ist eine Sichtblende (5) vorgesehen, die relativ zu einer Anzeigefläche derart beweglich sind, dass wahlweise jedes der Symbole einzeln im Sichtfenster (6) sichtbar positionierbar ist.

## Beschreibung

Die Erfindung betrifft ein Getränkegefäß.

Getränkegefäße, insbesondere Isolierkannen, werden zur Aufbewahrung unterschiedlicher Getränke verwendet. Oft kann der Benutze, insbesondere wenn die Gefäßwand undurchsichtig ist, nicht feststellen, welches Getränk sich gerade im Getränkegefäß befindet. Oft kommt es vor, dass von einer Vielzahl von bereitgestellten Getränkegefäßen erst einige geöffnet werden müssen, um das Getränkegefäß mit dem gewünschten Inhalt zu identifizieren.

Es ist daher die Aufgabe der vorliegenden Erfindung ein Getränkegefäß anzugeben, das es auf einfache Weise ermöglicht, die im Getränkegefäß befindlichen Getränkeart schnell erkennen zu können, ohne das Getränkegefäß öffnen zu müssen.

Die Aufgabe wird durch einen Getränkegefäß gelöst, der dadurch gekennzeichnet ist, dass ein Anzeigemittel zur Anzeige der im Getränkegefäß befindlichen Getränkeart vorgesehen ist.

Die Erfindung hat den Vorteil, dass der Befüller des erfindungsgemäßen Getränkegefäßes auf einfache Weise und für jedermann sichtbar dokumentieren kann, welches Getränk er eingefüllt hat.

In einer vorteilhaften Ausführung weist das Anzeigemittel eine Anzeigefläche auf, auf der zumindest zwei Getränkearten Symbole, beispielsweise durch Buchstaben und/oder durch Zeichnungen und/oder durch Bilder, dargestellt sind. Beispielsweise können Symbole für Kaffee, Tee, Wasser oder Saft vorgesehen sein.

In einer besonders gut zu bedienende Ausführung des erfindungsgemäßen Getränkegefäßes weist das Anzeigemittel eine Sichtblende, vorzugsweise mit einem Sichtfenster, auf. Die Anzeigevorrichtung kann vorteilhafter Weise derart ausgebildet sein, dass die Sichtblende und die Anzeigefläche relativ zueinander beweglich, beispielsweise linear verschiebbar oder drehbar, angeordnet sind, so dass wahlweise jedes der Symbole einzeln im Sichtfenster für den Benutzer sichtbar positionierbar ist. Auf diese Weise sind verschiedene Anzeigepositionen einstellbar. Die Sichtblende kann beispielsweise mit einer Sperrscheibe drehbar gehaltert sein.

Die Anzeigefläche kann in einer vorteilhaften Ausführung beispielsweise mehrere im Kreis angeordnete Symbole aufweisen. Die Sichtblende ist in dieser Ausführung vorzugsweise um eine Drehachse drehbar gelagert, die durch den Kreismittelpunkt verläuft. Sowohl die Anzeigefläche, als auch die Sichtblende können gewölbt ausgeführt sein, um sich der Kontur des Getränkegefäßes anzupassen.

In einer besonders vorteilhaften Ausführung ist die Sichtblende als Wählscheibe, wie bei alten Telefonen, ausgebildet, so dass der Benutzer mit der in das Sichtfenster eingeführten Fingerkuppe auf einfache Weise die Anzeigeposition einstellen kann.

Bei einer vorteilhaften Ausführung ist vorgesehen, dass die Sichtblende relativ zur Anzeigefläche in zumindest einer Stellung, vorzugsweise in jeder Anzeigeposition, - vorübergehend und wieder lösbar - arretierbar ist. Zum vorübergehenden Arretieren der Sichtblende relativ zur Anzeigefläche kann beispielsweise eine Rastvorrichtung vorgesehen sein. In einer vorteilhaften Ausführung weist die Rastvorrichtung einen Raststift auf.

In einer besonderen Ausführung weist die Rastvorrichtung eine Feder auf, die beispielsweise den Raststift und/oder die Sichtblende mit einer Federkraft beaufschlagt. Beispielsweise kann vorgesehen sein, dass der Raststift von der Feder in eine Rastmude gedrückt wird, um die Sichtblende relativ zur Anzeigefläche vorübergehend zu arretieren.

In einer vorteilhaften Ausführung weist das Getränkegefäß einen Verschluss - vorzugsweise mit einem Stopfen - auf. Der Stopfen kann vorteilhafter Weise federkraftbeaufschlagt sein und derart angeordnet sein, dass er vom Benutzer beispielsweise mit Hilfe eines Öffnungshebels in eine Öffnungsstellung überführen lässt und automatisch durch die Federkraft nach dem Loslassen des Öffnungshebels in eine Verschlussstellung gedrückt wird in der er das Getränkegefäß verschließt.

In einer ganz besonders bauteile- und bauraumsparenden Ausführung ist vorgesehen, dass die Feder sowohl den Raststift und/oder die Sperrscheibe und/oder die Sichtblende als auch den Stopfen mit einer Federkraft beaufschlagt. Die Feder ist sowohl Bestandteil der Restvorrichtung, als auch Bestandteil des Getränkegefäßverschlusses.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: ein erfindungsgemäßes Getränkegefäß,
- Fig. 2: eine Detailansicht mit einer Anzeigevorrichtung,
- Fig. 3: eine Detailansicht des Verschlusses in einer Seitenansicht, und
- Fig. 4: eine Schnittdarstellung des Verschlusses.

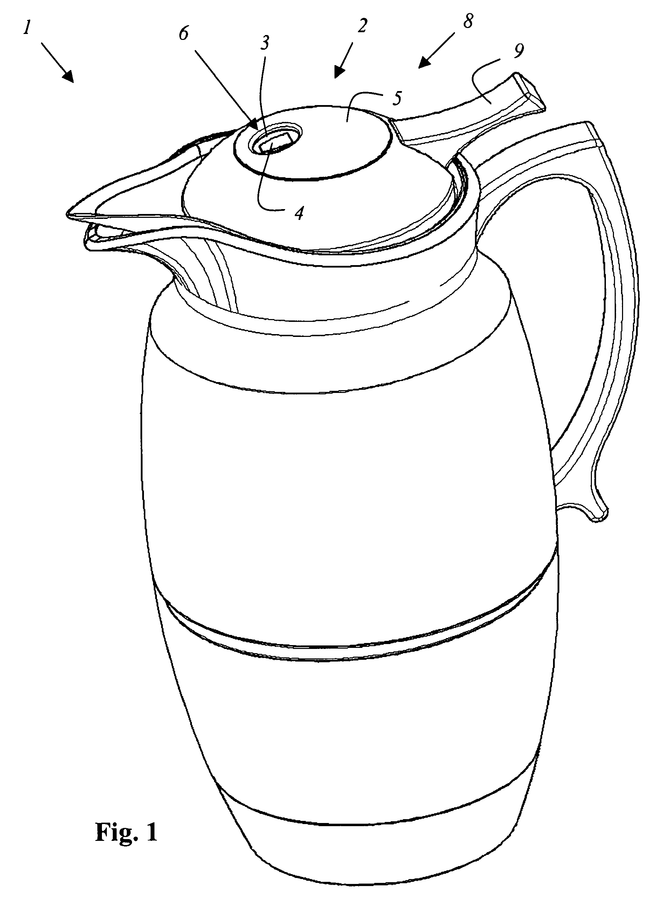

Fig. 1 zeigt ein erfindungsgemäßes Getränkegefäß 1 mit einem Anzeigemittel 2 zur Anzeige der im Getränkegefäß 1 befindlichen Getränkeart. Das Anzeigemittel 2 weist eine Anzeigefläche 3 auf, auf der zumindest zwei Getränkearten durch kreisförmig zueinander angeordnete Symbole 4 dargestellt sind. Das Anzeigemittel 2 weist eine Sichtblende 5 mit einem Sichtfenster 6 auf, durch das je nach Drehstellung der relativ zur Anzeigenfläche 3 drehbar gelagerten Sichtblende 5 unterschiedliche Symbole zu sehen sind. Durch die Auswahl der Drehstellung der Sichtblende 5 kann dem Benutzer auf einfache Weise angezeigt werden, welche Getränkeart sich in dem Getränkegefäß 1 befindet. Die Sichtblende 5 ist um eine durch den Mittelpunkt des Kreises auf dem die Symbole 4 angeordnet sind verlaufende Achse 7 drehbar gelagert und in Form einer Wählscheibe wie bei alten Telefonen ausgebildet, so dass eine schnelle und einfache Einstellung der gewünschten Anzeigestellung mit Hilfe der Fingerkuppe oder mit dem Ende eines Schreibstiftes ermöglicht ist.

Das Getränkegefäß 1 ist als Isolierkanne ausgebildet und weist einen abschraubbaren Verschluss 8 auf. Der Verschluss beinhaltet einen in dieser Figur nicht sichtbaren Stopfen, der mit Hilfe eines Öffnungshebels 9 bedienbar ist.

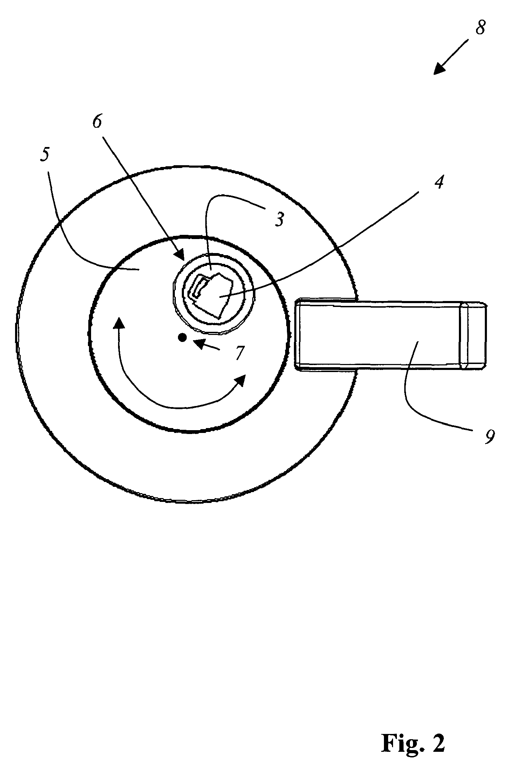

Fig. 2 zeigt eine Detailansicht des Verschlusses 8 von oben mit der Anzeigevorrichtung 2. Durch drehen der Sichtblende 5 relativ zur Anzeigefläche 3, die unterhalb der Sichtblende 5 und parallel zu dieser angeordnet ist, um die Achse 7 kann das Sichtfenster 6 in die gewünschte Anzeigestellung gebracht werden, so dass das Symbol 4 sichtbar ist, das der im Getränkegefäß 1 befindlichen Getränkeart entspricht.

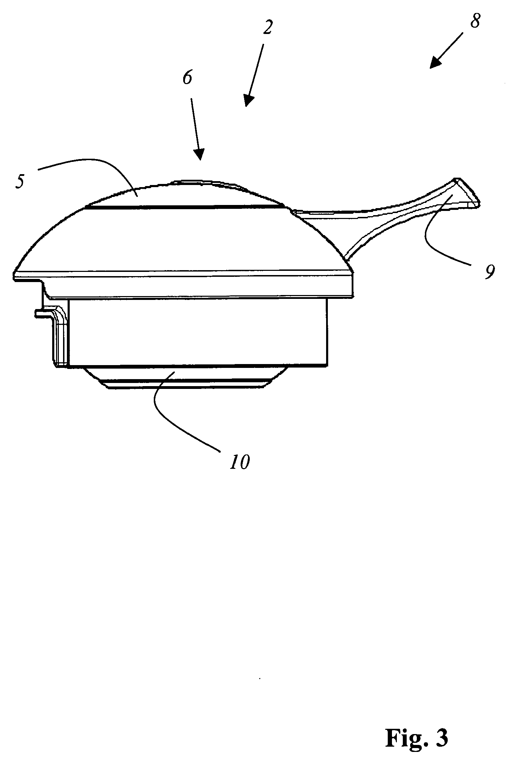

Fig. 3 zeigt eine Detailansicht des Verschlusses 8 mit der Anzeigevorrichtung 2 in einer Seitenansicht. Durch drehen der Sichtblende 5 kann das Sichtfenster 6 in die gewünschte Anzeigestellung gebracht werden

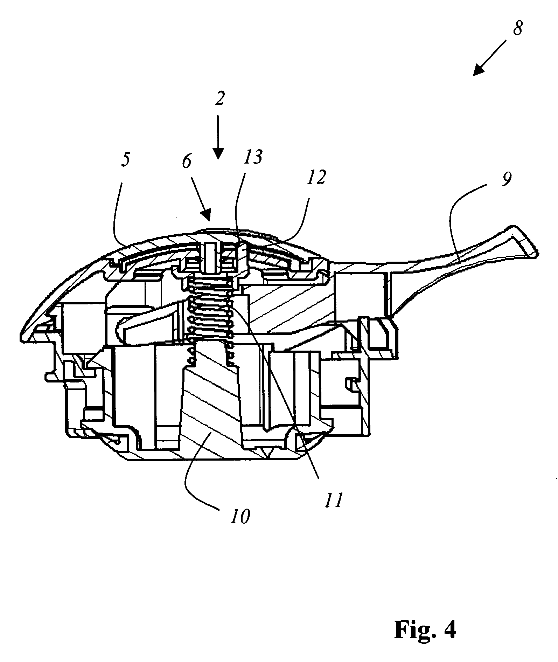

Fig. 4 zeigt eine Schnittdarstellung des Verschlusses 8. Der Verschlusses 8 weist einen Stopfen 10 auf. Der Stopfen 10 ist durch eine Feder 11 federkraftbeaufschlagt und derart angeordnet, dass Der Stopfen 10 vom Benutzer mit Hilfe des Öffnungshebels 9 angehoben und so in eine Öffnungsstellung überführt werden kann. Nach dem Loslassen des Öffnungshebels 9 wird der Stopfen 10 automatisch durch die Federkraft in seine Verschlussstellung gedrückt wird in der er das Getränkegefäß 1 verschließt. Die Anzeigevorrichtung 2 weist eine Rastvorrichtung mit einem Raststift 12 auf , der von der Feder 11 in eine in der Sichtblende 5 befindliche Rastmulde 13 gedrückt wird, um die Sichtblende 5 in der gewählten Drehstellung wieder lösbar zu arretieren.

### Bezugszeichenliste:

- 1: Getränkegefäß
- 2: Anzeigemittel
- 3: Anzeigenfläche
- 4: Symbole
- 5: Sichtblende
- 6: Sichtfenster
- 7: Achse
- 8: Verschluss
- 9: Öffnungshebel
- 10: Stopfen
- 11 1: Feder
- 12: Raststift
- 13: Rastmulde

## Patentansprüche

1. Getränkegefäß, **dadurch gekennzeichnet, dass** ein Anzeigemittel zur Anzeige der im Getränkegefäß befindlichen Getränkeart vorgesehen ist.

2. Getränkegefäß nach Anspruch 1, **dadurch gekennzeichnet, dass** das Anzeigemittel eine Anzeigefläche aufweist, auf der zumindest zwei Getränkearten durch Symbole, beispielsweise durch Buchstaben und/oder durch Zeichnungen und/oder durch Bilder, dargestellt sind.

3. Getränkegefäß nach einem der Ansprüche 1 oder 2, **dadurch gekennzeichnet, dass** das Anzeigemittel eine Sichtblende aufweist.

4. Getränkegefäß nach Anspruch 3, **dadurch gekennzeichnet, dass** das die Sichtblende ein Sichtfenster aufweist.

5. Getränkegefäß nach Anspruch 4, **dadurch gekennzeichnet, dass** die Sichtblende und die Anzeigefläche relativ zueinander beweglich angeordnet sind.

6. Getränkegefäß nach einem der Ansprüche 4 oder 5, **dadurch gekennzeichnet, dass** die Sichtblende als Wählscheibe, beispielsweise wie bei alten Telefonen, ausgebildet ist.

7. Getränkegefäß nach einem der Ansprüche 4 bis 6, **dadurch gekennzeichnet, dass** die Sichtblende und die Anzeigefläche derart relativ zueinander beweglich sind, dass wahlweise jedes der Symbole einzeln im Sichtfenster sichtbar positionierbar ist.

8. Getränkegefäß nach einem der Ansprüche 4 bis 7, **dadurch gekennzeichnet, dass** die Sichtblende relativ zur Anzeigefläche in jeder Anzeigeposition - vorübergehend und wieder lösbar -arretierbar ist.

9. Getränkegefäß nach einem der Ansprüche 4 bis 8, **dadurch gekennzeichnet, dass** eine Rastvorrichtung zum vorübergehenden Arretieren der Sichtblende relativ zur Anzeigefläche vorgesehen ist.

10. Getränkegefäß nach Anspruch 9, **dadurch gekennzeichnet, dass** die Rastvorrichtung eine Feder aufweist, die einen Raststift und/oder die Sperrscheibe und/oder die Sichtblende mit einer Federkraft beaufschlagt.

11. Getränkegefäß nach einem der Ansprüche 1 bis 10, **dadurch gekennzeichnet, dass** das Getränkegefäß einen Verschluss mit einem Stopfen aufweist.

12. Getränkegefäß nach einem der Ansprüche 10 oder 11, **dadurch gekennzeichnet, dass** die Feder sowohl den Raststift und/oder die Sperrscheibe und/oder die Sichtblende als auch den Stopfen mit einer Federkraft beaufschlagt.
